Europäisches Patentamt

European Patent Office

Office européen des brevets

(11) Publication number: **0 624 963 A1**

## EUROPEAN PATENT APPLICATION

(21) Application number: **93107827.3**

(22) Date of filing: **13.05.93**

(51) Int. Cl.⁵: **H04H 7/00**

(43) Date of publication of application:
**17.11.94 Bulletin 94/46**

(84) Designated Contracting States:
**DE FR GB NL**

(71) Applicant: **NIPPON TELEVISION NETWORK CORPORATION**
**14 Niban-cho,**
**Chiyoda-ku**
**Tokyo,102-40 (JP)**

(72) Inventor: **Aikoh, Shinichi, c/o Nippon Television Network**
**Corp.,**
**Eng. Res. & Dev. Cent.,**
**14 Niban-cho**
**Chiyoda-ku, Tokyo 102-40 (JP)**

(74) Representative: **Howden, Christopher Andrew et al**
**FORRESTER & BOEHMERT**
**Franz-Joseph-Strasse 38**
**D-80801 München (DE)**

(54) **Sound echo cancelling system for satellite news gathering systems.**

(57) A Satellite News Gathering system, communicates between the TV studio and a mobile ground station, using an existing broadcast link through an existing TV transmitter for transmitting the TV studio sound to the mobile groundstation. The mobile groundstation uses a satellite link to transmit to the TV studio.

In order to remove the reporters voice signal from the broadcast signal, which returns from the TV studio through the TV transmitter, as an echo signal, the reporters voice signal is delayed at the mobile ground station, and subtracted from the broadcast signal being received from the TV transmitter.

*FIG. 2*

A monitor receiving system and a monitor receiving device

## BACKGROUND OF THE PRESENT INVENTION

The present invention relates to a monitor receiving system and a monitor receiving device for a signal communication between a key station and a local place through a repeater station using a communications satellite line and a broadcasting line between the key station and the repeater station, and an art offering a monitor voice to make a reporter in a local place easy to talk.

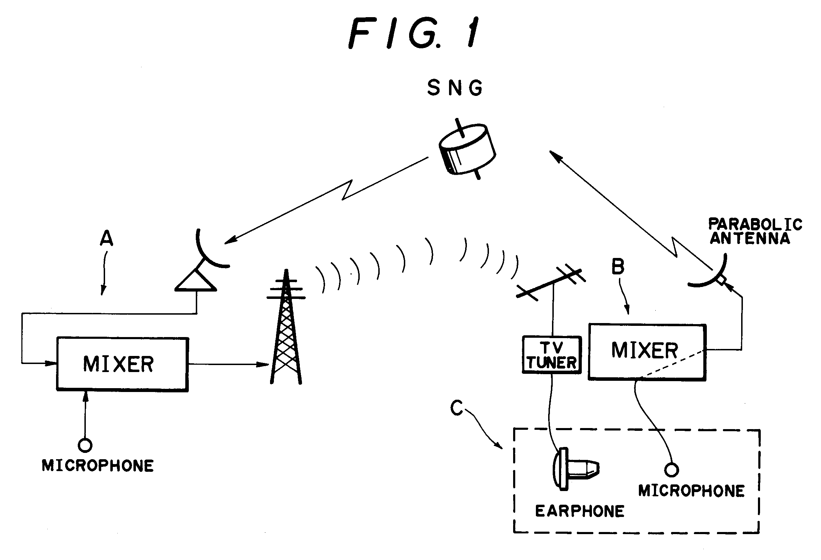

As being made a broadcasting technic to use a communications satellite fit for practical use as shown the outline in Fig.1, the present television broadcasting technic is used actively to broadcast many kinds of programs in each broadcasting company with use of the communications satellite. There are many methods of practical use for using the Satellite News Gathering (hereinunder called "SNG" in shortened expression). As an suitable example among them, a morning program "Zoom in Asa" broadcasted by Nippon Television Network Corporation can be introduced. The style of the program is a so-called "Kakeai(dialog)", in which the key station A and the repeater station B are connected with a SNG line as shown in Fig.1, a caster in the key station makes various kinds of questions and a reporter at the local place C in the repeater station B answers the questions.

In the case of sending a speech signal sent to the key station A from the local place C through the repeater station B and the communications satellite line to the local place C through the television broadcasting line and the repeater station B and receiving the signal at the local place C, however, the reporter listens delayed his/her own voice as an echo and is very difficult to talk because the speech signal of the reporter in the local place C is delayed about 250ms while coming to the studio in the key station A through the repeater station B and the communications satellite line, the delayed signal is mixed with a speech signal added in the key station A and turned a television signal, the reporter in the local place C receives the television signal through the repeater station B.

For avoiding the above problem, conventionally, so-called "N-1" system, that is a receiving system sending back a speech signal taken away the voice of the reporter in the local place from the mixed program speech signal in the key station A with a telephone line or other specially provided speech line to let the reporter in the local place C monitor the voice, is adopted. However, there is a problem that the receiving system is costly and makes the communications line complicated.

## SUMMARY OF THE PRESENT INVENTION

This invention takes such a matter into consideration, and aims to offer an art of producing a monitor voice to make a reporter in a local place easy to talk by using a communications satellite line and a broadcasting line between the key station and the repeater station when communicating between the key station and the local place through the repeater station.

The above object is achieved by a monitor receiving system comprising a system for communication between a key station and a local place through a repeater station wherein a communications satellite line and a broadcasting line are used for communication between said key station and said repeater station in a way that a signal that is sent to the key station from said local place through the repeater station and the communications satellite line and a signal which is added at the key station are mixed and turned a mixed signal, the mixed signal is sent to the repeater system from the key station through the broadcasting line, then the mixed signal is received at the local place through the repeater station, wherein a signal same as the signal sent to the key station through said communications satellite line is delayed for a delay time caused by the communications satellite line, then an equalization procedure is performed, and the equalized signal is subtracted from the mixed signal.

The receiving system of the present invention is desirable a monitor receiving system comprising a repeater station in which a process that a signal same as the signal sent to the key station through the communications satellite line is delayed for a delay time caused by the communications satellite line, then an equalization procedure is performed and the equalized signal is subtracted from the mixed signal, is performed.

More, it is desirable a monitor receiving system characterized in that, when the signal sent to the key station through the communications satellite line includes a speech signal, a signal same as the signal sent to the key station through the communications satellite line is delayed for a delay time caused by the communications satellite line, then an equalization procedure is performed and the equalized signal is subtracted from the mixed signal.

More, it is desirable a monitor receiving system characterized in that, when the signal sent to the key station through the communications satellite line and the mixed signal include speech signals, a signal same as the signal sent to the key station through the communications satellite line is delayed for a delay time caused by the communications satellite line, then an equalization procedure is performed and the equalized signal is subtracted from the mixed signal.

More, it is desirable a monitor receiving system comprising a system for communication between the key station and a plurality of local places through the repeater station wherein a communications satellite line and a broadcasting line are used for communication between the key station and said repeater station in a way that a signal that is sent to the key station from the first local place among a plurality of the local places through the repeater station and the communications satellite line and a signal that is added at the key station are mixed and turned a mixed signal, the mixed signal is sent to a plurality of the local places from the key station through the broadcasting line and the repeater station, then the mixed signal is received at a plurality of the local places, wherein a signal same as the signal sent to the key station from said first local place is received at the other places through the repeater station, and a remained signal by subtraction of the equalized signal from the mixed signal is received at a plurality of the local places.

Further more, the object of the present invention is achieved by a monitor receiving device comprising a delay circuit, an adaptive equalizer and a subtracter, wherein said delay circuit receives a same signal as a signal sent to a key station from a local place through a repeater station and a communications satellite line, delays the signal for a delay time caused by the communications satellite line, then outputs a result, said adaptive equalizer receives a feed back signal of said subtracter and a signal from said delay circuit, equalizes the amplitude and the phase of the signal from said delay circuit as the level of the signal from said subtracter becomes minimum, then outputs a result, said subtracter receives a mixed signal sent to the repeater station through a broadcasting line and said equalized signal, subtracts said equalized signal from said mixed signal, then outputs a result.

More, in the monitor receiving system of the present invention, it is desirable a monitor receiving device additionally comprising the first A/D converter converting a signal same as the signal sent to the key station from the local place through the repeater station and the communications satellite line to a digital signal, the second A/D converter converting the mixed signal sent to the repeater station through the broadcasting line to a digital signal, and a D/A converter converting the output signal of the subtracter to an analog signal.

Additionally, the above delay circuit is desarable to be comprised as to delay a received signal for a delay time caused by the communications satellite line by way of first-in-first-out system and outputting a signal. And, the delay circuit is desirable to be comprised as to be able to vary the delay time of the received signal.

More, the above adaptive equalizer is desirable to equalize the amplitude and the phase of the signal sent from said delay circuit as to be the level of the feed back signal of the subtracter zero and output a result. Also, the above adaptive equalizer is desirable to have a digital signal processor of which memory stores a program to correct in order filtering processing and a filter coefficient of the adaptive equalizer.

More, it is desirable that the monitor receiving device is comprised of a speech detector to detect a speech signal existing in mixture within the signal same as the signal sent to the key station from the local place through the repeater station and the communications satellite line, and comprised in that only when said speech detector detects said speech signal the adaptive equalizer operates.

More, it is desirable that the monitor receiving device is comprised of the first speech detector to detect a speech signal existing in mixture within the signal same as the signal sent to the key station from the local place through the repeater station and the communications satellite line and the second speech detector to detect a speech signal existing in mixture within a mixed signal sent to the repeater station from the key station through the broadcasting line, and comprised in that only when both of the first and second speech detectors have detected the speech signal the adaptive equalizer operates.

Further more, it is desirable that the monitor receiving device is comprised of a receiving section receiving signals sent from a plurality of local places and a sending section sending a signal to a plurality of local places, wherein said receiving section outputs a signal same as the signal sent from the first local place among a plurality of the local places to the sending section and the delay circuit, said sending section sends the output signal of said receiving section to the other local places, and sends the output signal of the subtracter to a plurality of the local places.

By the present invention described as above, a reporter in the repeater station can listen only the voice in the studio among the broadcasted voices, so that the reporter can talk naturally as well as any broadcasting line based on the conventional "N-1" system is not necessary and the communication system is simplified and reduced in cost.

More, in the monitor communication system of the present invention, the local place can serve as the repeater station by comprising the monitor receiving device comprising as to be carried by the reporter.

The monitor communication system and the monitor communication device of the present invention are applicable not only for a communications satellite line but also any communication means where delay of signal occurs.

BRIEF DESCRIPTION OF THE DRAWINGS

Fig.1 illustrates an outline of a communication system between a key station and a repeater station in a combined use of a communications satellite line and a television broadcasting line.

Fig.2 illustrates an embodiment of the monitor receiving system of the present invention.

Fig.3 is a block diagram showing the first embodiment of the monitor receiving device of the present invention.

Fig.4 is a block diagram showing the second embodiment of the present invention.

Fig.5 is a block diagram showing the third embodiment of the present invention.

Fig.6 is a block diagram showing the fourth embodiment of the present invention.

DETAILED DESCRIPTION OF PREFERRED EMBODIMENT

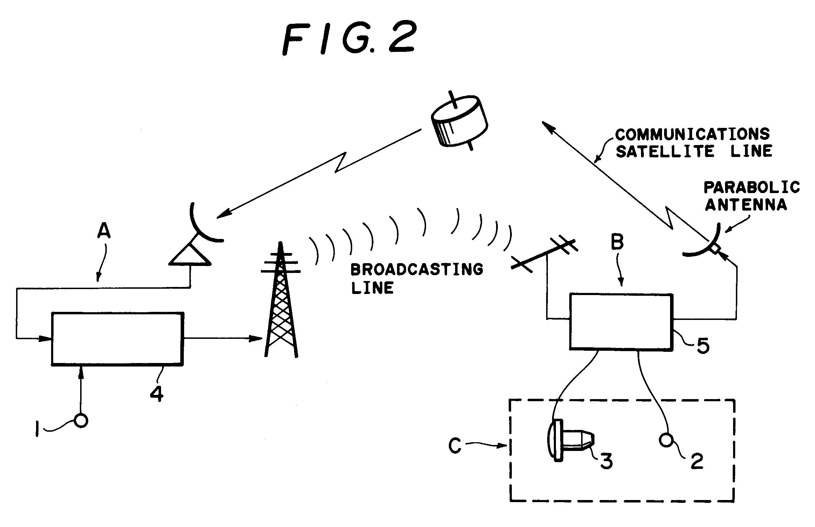

Fig.2 illustrates the first embodiment of the monitor receiving system of the present invention.

In Fig.2, 1 is a microphone in the key station A, 2 is a microphone in the local place C, 3 is an earphone in the local place C, 4 is a mixer in the key station A and 5 is a receiving device of the present invention in the repeater station B, the key station A and the local place C can communicate each other through the repeater station B using the communications satellite line and the broadcasting line between the key station A and the repeater station B.

the speech output signal of a reporter of the microphone 2 is sent to the key station A with the communications satellite line through the repeater station B. At this time, the speech signal of the reporter is delayed about 250ms. The key station A receives the delayed speech signal, mixes the delayed speech signal and a speech signal added in the key station A with the mixer 4 and sends the mixed television signal to the repeater station B through the television broadcasting line. In the repeater station B that received the television signal from the key station A, the receiving device 5 is equalizing after delaying the same signal as the speech output signal of the reporter of the microphone 2 about 250ms same as the delay time caused by the communications satellite line, the equalized signal is subtracted from the television signal sent from the key station A. After that, the remained signal by the subtraction is sent to the local place C.

As the result, only the speech signal of the reporter included in th the television signal is removed, the reporter in the local place C can listen only the speech signal added in the key station A with the earphone 3.

Next, the first embodiment of the monitor receiving device of the present invention is explained.

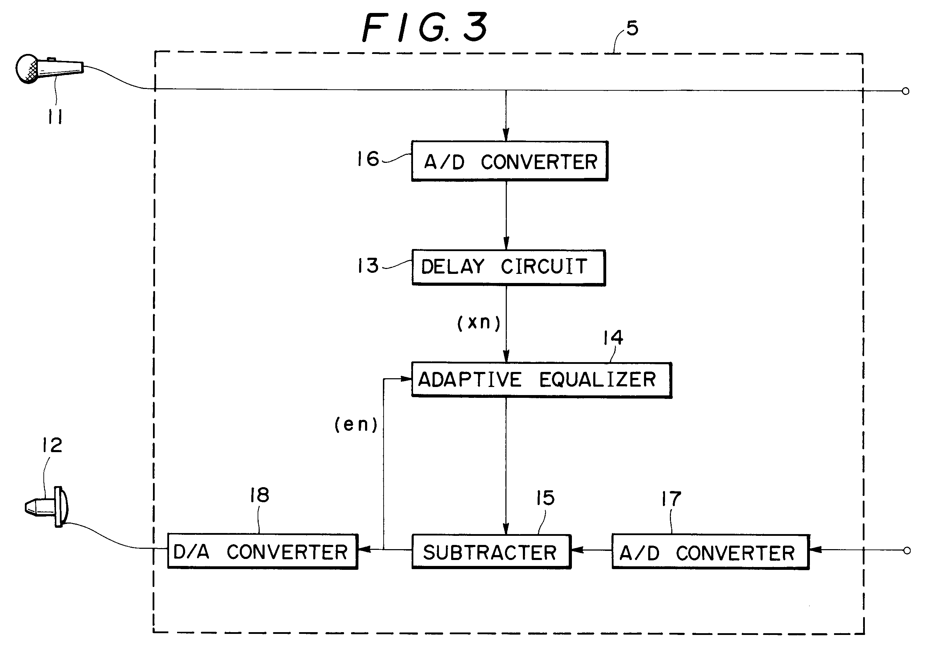

Fig.3 is a block diagram showing the first embodiment of the receiving device of the present invention.

In this figure, 11 is a microphone in the local place, 12 is an earphone in the local place, 13 is a delay circuit, 14 is an adaptive equalizer, 15 is a subtracter, 16 is the first A/D converter, 17 is the second A/D converter and 18 is a D/A converter.

The receiving device 5 comprises the delay circuit 13, the adaptive equalizer 14, the subtracter 15, the first A/D converter 16, the second A/D converter 17 and the D/A converter 18.

Here, a input signal of the microphone 11 in the local place C is converted to a digital signal in the first A/D converter 16, the signal is supplied to the delay circuit 13, after that a signal(xn) that is delayed for a delay time (e.g. about 250ms) caused when it has been sent to the key station A through the communications satellite line is output by the delay circuit 13. Hereupon, the delay circuit 3 is composed of FIFO (IDT7204, Product of IDT), it delays the signal by the first-in-first-out system. Considering that the delay time caused by the communications satellite line is dependent on the distance between the key station A and the repeater station B, the delay circuit 13 is comprised enable to properly vary the delay time.

Next, the adaptive equalizer 14 receives the output signal (xn) of the delay circuit 13 and the feed back signal (en) of the subtracter 15, equalizes the amplitude and the phase of the output signal (xn) of the delay circuit 13 as the level of the feed back signal (en) of the subtracter 15 becomes minimum.

By the way, the adaptive equalizer 14 is provided with a digital signal processor ($\mu$PD77230, Product of NEC) storing in its memory the program to correct filtering processing and the filter coefficient, and it is performing equalization with a filter of a well-known transversal type. For correcting the filter coefficient, an LMS (Least Mean Square) algorithm that corrects the filter coefficient in order to make the level of the feed back signal (en) of the subtracter 15 minimum, and the coefficient is corrected using the following equation.

$$Ci(n+1) \ = \ Ci(n) + \mu e(n)x(n\text{-}i)$$

Where, i is a tap number, $\mu$ is tap gain, each value in ( ) is the sampling time.

More, for the algorithm the normalized algorithm can be used as well as the above LMS algorithm.

Thus, the subtracter 15 receives the equalized signal and a television signal, subtracts the equalized signal from the television signal and outputs a result. The output signal of the subtracter 15 is received by the earphone 12 in the local place C through the D/A converter 18.

As the result, the reporter in the local place C can listen only the voice of the key station.

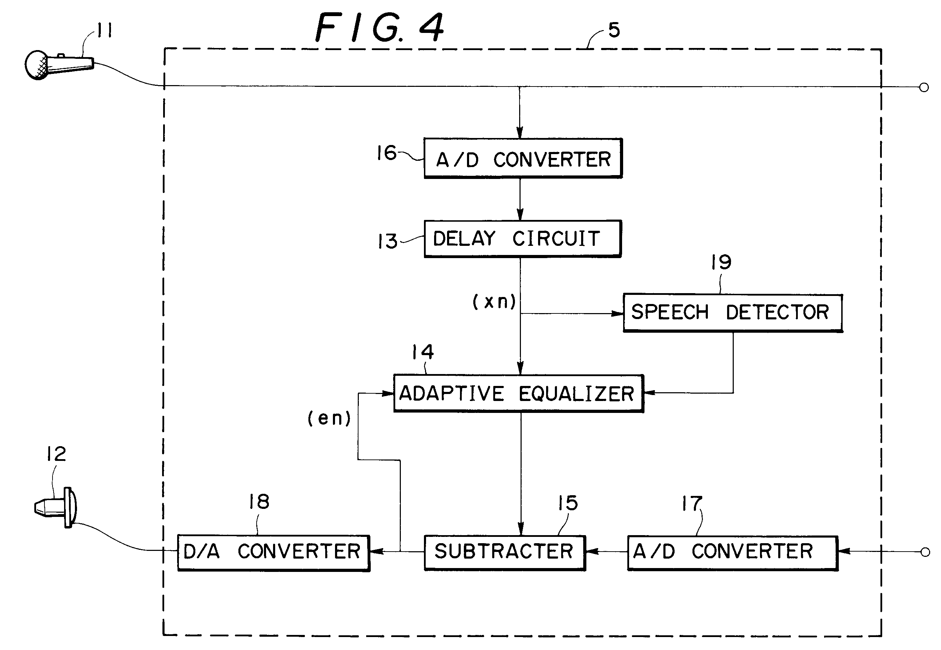

Fig.4 is a block diagram showing the second embodiment of the present invention.

In the second embodiment, the speech detector 19 is provided, and only when the speech detector 19 has detected a speech signal from the microphone 11 through the delay circuit 13 the adaptive equalizer operates.

By comprising as above, only when the reporter is talking the television signal is processed, so that the reporter can listen more natural voice of a caster in the key station A when the caster in the key station A and the reporter in the local place C dialog. Also, it can be avoided a mistake when correcting the filter coefficient of the adaptive equalizer 14 by the voice of the caster in the key station A.

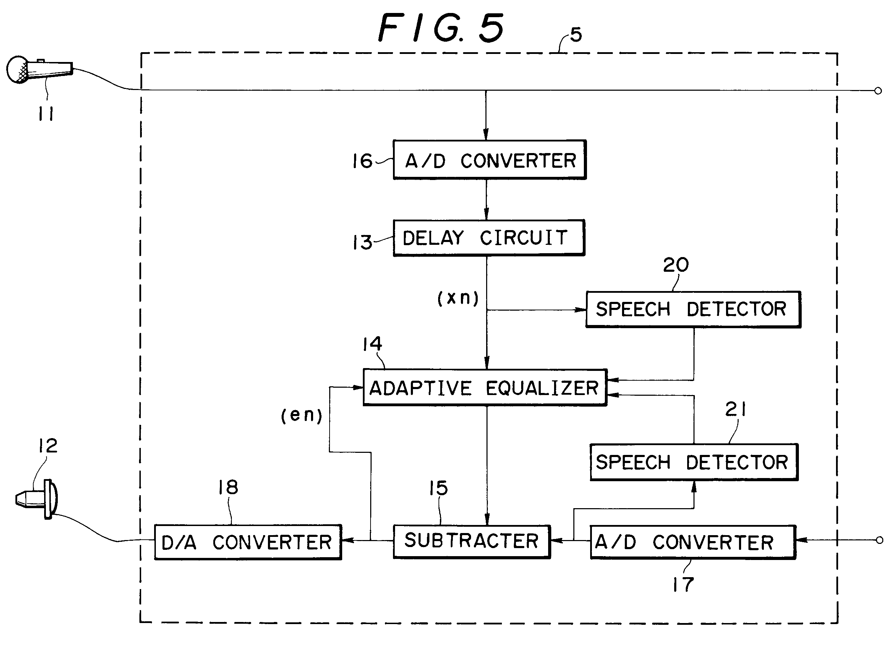

Fig.5 is a block diagram of the third embodiment of the present invention.

In the third embodiment, the first speech detector 20 is provided between the delay circuit 13 and the adaptive equalizer 14, and the second speech detector 21 is provided between the adaptive equalizer 14 and the input side of the television signal.

Also, only when said first speech detector 20 detects the speech signal from the microphone 11 through the delay circuit 13 and the second speech detector 21 detects the speech signal in the television signal the adaptive equalizer 14 operates.

By comprising as above, such effect can be realized that it can be avoided a mistake when correcting the filter coefficient of the adaptive equalizer 14 in a microphone test before on air because the adaptive equalizer 14 operates only when the voice of the reporter in the local place C is actually on air for television broadcasting.

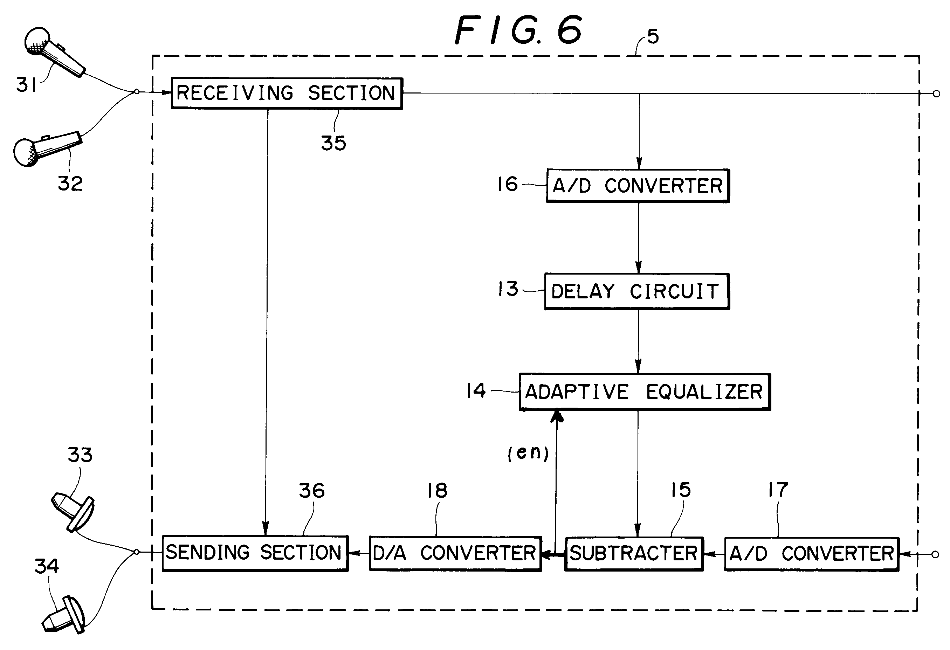

Fig.6 is a block diagram showing the fourth embodiment of the present invention.

In the figure, 31 is the first microphone in a local place, 32 is another microphone in the local place, 33 is the first earphone in the local place, 34 is another earphone in the local place, 35 is a receiving section and 36 is a sending section.

In the embodiment, the speech signal sent from the microphone 31 is received in the receiving section 35 and the speech signal is sent to the delay circuit 13 and the sending section 36. The sending section 36 sends the received speech signal sent from the microphone 31 to another earphone 34 also sends the speech output signal of the subtracter 15 to the earphone 33 and another earphone 34 in the local place.

By comprising as above, when a dialogue takes place between the reporter in the local place and the caster in the key station A the reporter in the local place can naturally listen the voice as described in the above embodiment.

More, another reporter in the local place can listen the voice of the first reporter in the local place without any delay, so that the dialogue between reporters becomes natural.

The features disclosed in the foregoing description, in the claims and/or in the accompanying drawings may, both separately and in any combination thereof, be material for realising the invention in diverse forms thereof.

## Claims

1. A monitor receiving system comprising a system for communication between a key station and a local place through a repeater station wherein a communications satellite line and a broadcasting line are used for communication between said key station and said repeater station in a way that a signal that is sent to the key station from said local place through the repeater station and the communications satellite line and a signal which is added at the key station are mixed and turned a mixed signal, the mixed signal is sent to the repeater system from the key station through the broadcasting line, then the mixed signal is received at the local place through the repeater station, wherein a signal same as the signal sent to the key station through said communications satellite line is delayed for a delay time caused by the communications satellite line, then an equalization procedure is performed, and the equalized signal is subtracted from the mixed signal.

2. The monitor receiving system as set forth in claim 1, comprising a repeater station in which a process that a signal same as the signal sent to the key station through the communications satellite line is delayed for a delay time caused by the communications satellite line, then an equalization procedure is performed and the equalized signal is subtracted from the mixed signal, is performed.

3. The monitor receiving system as set forth in claim 1, characterized in that, when the signal sent to the key station through the communications satellite line includes a speech signal, a signal same as the signal sent to the key station through the communications satellite line is delayed for a delay time caused by the communications satellite line, then an equalization procedure is performed and the equalized signal is subtracted from the mixed signal.

4. The monitor receiving system as set forth in claim 1, characterized in that, when the signal sent to the key station through the communications satellite line and the mixed signal include speech signals, a signal same as the signal sent to the key station through the communications satellite line is delayed for a delay time caused by the communications satellite line, then an equalization procedure is performed and the equalized signal is subtracted from the mixed signal.

5. The monitor receiving system as set forth in claim 1, comprising a system for communication between the key station and a plurality of local places through the repeater station wherein a communications satellite line and a broadcasting line are used for communication between the key station and said repeater station in a way that a signal that is sent to the key station from the first local place among a plurality of the local places through the repeater station and the communications satellite line and a signal that is added at the key station are mixed and turned a mixed signal, the mixed signal is sent to a plurality of the local places from the key station through the broadcasting line and the repeater station, then the mixed signal is received at a plurality of the local places, wherein a signal same as the signal sent to the key station from said first local place is received at the other places through the repeater station, and a remained signal by subtraction of the equalized signal from the mixed signal is received at a plurality of the local places.

6. A monitor receiving device comprising a delay circuit, an adaptive equalizer and a subtracter, wherein said delay circuit receives a same signal as a signal sent to a key station from a local place through a repeater station and a communications satellite line, delays the signal for a delay time caused by the communications satellite line, then outputs a result, said adaptive equalizer receives a feed back signal of said subtracter and a signal from said delay circuit, equalizes the amplitude and the phase of the signal from said delay circuit as the level of the signal from said subtracter becomes minimum, then outputs a result, said subtracter receives a mixed signal sent to the repeater station through a broadcasting line and said equalized signal, subtracts said equalized signal from said mixed signal, then outputs a result.

7. The monitor receiving device as set forth in claim 6, additionally comprising the first A/D converter converting a signal same as the signal sent to the key station from the local place through the repeater station and the communications satellite line to a digital signal, the second A/D converter converting the mixed signal sent to the repeater station through the broadcasting line to a digital signal, and a D/A converter converting the output signal of the subtracter to an analog signal.

8. The monitor receiving device as set forth in claim 6, comprising a delay circuit to delay a received signal for a delay time caused by the communications satellite line by way of first-in-first-out system and outputting a signal.

9. The monitor receiving device as set forth in claim 6, comprising the delay circuit to be able to vary the delay time of the received signal.

10. The monitor receiving device as set forth in claim 6, comprising the adaptive equalizer to equalize the amplitude and the phase of the signal sent from said delay circuit as to be the level of the feed back signal of the subtracter zero and output a result.

11. The monitor receiving device as set forth in claim 6, comprising the adaptive equalizer having a digital signal processor of which memory stores a program to correct in order filtering processing and a filter coefficient of the adaptive equalizer.

12. The monitor receiving device as set forth in claim 6, comprising a speech detector to detect a speech signal existing in mixture within the signal same as the signal sent to the key station from the local place through the repeater station and the communications satellite line, and comprised in that only when said speech detector detects said speech signal the adaptive equalizer operates.

13. The monitor receiving device as set forth in claim 6, comprising the first speech detector to detect a speech signal existing in mixture within the signal same as the signal sent to the key station from the local place through the repeater station and the communications satellite line and the second speech detector to detect a speech signal existing in mixture within a mixed signal sent to the repeater station from the key station through the broadcasting line, and comprised in that only when both of the first and second speech detectors have detected the speech signal the adaptive equalizer operates.

14. The monitor receiving device as set forth in claim 6, comprising a receiving section receiving signals sent from a plurality of local places and a sending section sending a signal to a plurality of local places, wherein said receiving section outputs a signal same as the signal sent from the first local place among a plurality of the local places to the sending section and the delay circuit, said sending section sends the output signal of said receiving section to the other local places, and sends the output signal of the subtracter to a plurality of the local places.

# FIG. 1

SNG

A

PARABOLIC ANTENNA

B

MIXER

MICROPHONE

TV TUNER

MIXER

C

EARPHONE

MICROPHONE

EP 0 624 963 A1

# F I G. 2

COMMUNICATIONS
SATELLITE LINE

PARABOLIC
ANTENNA

A

B

BROADCASTING
LINE

C

1

2

3

4

5

EP 0 624 963 A1

# FIG. 3

A/D CONVERTER 16

DELAY CIRCUIT 13

(xn)

ADAPTIVE EQUALIZER 14

(en)

D/A CONVERTER 18

SUBTRACTER 15

A/D CONVERTER 17

EP 0 624 963 A1

# F I G. 4

16 — A/D CONVERTER

13 — DELAY CIRCUIT

(xn)

19 — SPEECH DETECTOR

14 — ADAPTIVE EQUALIZER

(en)

18 — D/A CONVERTER

15 — SUBTRACTER

17 — A/D CONVERTER

EP 0 624 963 A1

## FIG. 5

EP 0 624 963 A1

# FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EBU REVIEW- TECHNICAL no. 239, February 1990, BRUSSELS BE pages 20 - 23 A. CARUSO, SAWYER 'Considerations for using SNG portable packages' * page 21, line 10, paragraph 2 - line 22 * * paragraph 4 * | 1,6 | H04H7/00 |
| A | US-A-4 450 582 (RUSSELL) * column 1, line 53 - column 2, line 15 * | 1,6 | |
| A | US-A-4 360 827 (BRAUN) * column 1, line 37 - column 2, line 9; claims 1,2; figures 1,4 * | 1,6 | |
| A | FR-A-2 549 320 (NEC CORPORATION) * page 1, line 1 - page 2, line 26; claims 1-3 * * page 4, line 6 - page 5, line 13 * | 1,6 | |
| A | GB-A-2 220 546 (NEC CORPORATION) * page 1, line 1 - page 4, line 4; claims 1,2; figure 1 * | 1,6 | TECHNICAL FIELDS SEARCHED (Int. Cl.5 ) H04H H04B H04N |

The present search report has been drawn up for all claims

| Place of search | Date of completion of the search | Examiner |
|---|---|---|
| THE HAGUE | 28 SEPTEMBER 1993 | DE HAAN A.J. |